# EUROPEAN PATENT SPECIFICATION

(11) **EP 1 530 417 B1**
(45) Date of publication and mention of the grant of the patent: **26.07.2006**
(21) Application number: 03792525.2
(22) Date of filing: 26.08.2003
(51) Int. Cl.: A01K 11/00

(54) **ANIMAL IDENTIFIERS**
TIERIDENTIFIZIERER
IDENTIFICATEURS D'ANIMAUX

(30) Priority: 23.08.2002 GB 0219806
(43) Date of publication of application: 18.05.2005
(73) Proprietor: Shearwell Data Limited, Minehead, Somerset TA24 7AS (GB)
(72) Inventor: WEBBER, Richard, Minehead, Somerset TA24 7AS (GB)
(74) Representative: Stoner, Gerard Patrick
(86) International application number: PCT/GB2003/003699
(87) International publication number: WO 2004/017723

(56) References cited:
- EP-A- 0 870 429
- WO-A-91/10982
- NL-C- 1 008 869
- US-A- 5 891 156

## Description

This invention has to do with devices attachable to animals to identify them, particularly but not exclusively animal ear tags.

It is well-established practice to identify an animal uniquely by means of an ear tag carrying a visible code, e.g. numbers, letters or a combination of these. More recently, with a view to the automation.of animal identification, the practice of using electronic transponders has become widespread. These are components containing a microcircuit adapted, when stimulated by a suitable signal from an antenna near the animal, to emit a characteristic electromagnetic signal identifying the animal. By these means the animals can be electronically identified as they pass by the antenna, using a suitable reader to read the emitted characteristic signals. Transponder modules, typically small cylindrical components, may be put in dense boluses which reside in the animal's stomach. Or, they may be incorporated in or attached to ear tags or other identifier devices attached on the outside of the animal.

A typical ear tag has first and second parts which can be opposed on opposite sides of the animal's ear. Usually a sharp male part with a barbed tip is pushed through the animal's ear into a female part in which its tip is irreversibly trapped, so that the tag cannot thereafter be removed. The male and female parts may be separate, but more preferably they are provided at opposite ends of a single element which folds around the edge of the ear in a loop, making unauthorised removal of the device more difficult.

Previous proposals for incorporating transponders in ear tags include WO 91/10982 and WO 95/04455, in which the transponder sits in an axial cavity of the spike on the male portion. EP 1084614 describes a discrete transponder housing with a small loop for attaching to a separate (e.g. conventional) tag. US 4718697 shows the transponder sandwiched between sheets defining two capsule halves which are welded together. EP-A-0 870 429 uses three Z-folding sheet portions, the middle portion having a pocket for the transponder, one other portion being a cover for this and the other having a barbed spike passing through both to hold then together. Other documents describe flat annular transponder modules. EP 0754406 has a transponder in the form of a washer which fits around the male spike of a tag. WO 99/45760 shows a female component in the form of a disc with the transponder potted or encapsulated adjacent its rim. US 5588234 shows a conical tag body, either male or female, with the transponder coil extending around the base of the cone which has a central bore or spike for engagement with the other component.

What we propose are new constructions for an attachable animal identifier incorporating or adapted to incorporate a transponder. The new proposals are described with reference to ear tags, but the skilled person will appreciate that they may be applied with attachments adapted for securing to other parts of the body.

As specified in claim 1, we propose an animal identification device having mutually engageable male and female parts, adapted to fix together along a connection axis to attach the device to an animal in use, for example with the male part through an animal's ear, and comprising a body portion incorporating an internal transponder cavity to house an identification transponder in use, the transponder cavity having an insertion opening for the transponder which faces onto the connection axis at an opening of the female part so as to be accessible for insertion of an identification transponder in the disengaged condition of said male and female parts, but blocked by the male part in the engaged position.

As mentioned, the context of our various new proposals is an animal identification device attachable to the animal, having two opposable parts which can be fixed to one another in opposition to attach the device to the animal; also a transponder component. Typically the transponder component is a generally straight and elongate unit rather than a flat open coil annulus as in some previous proposals, but the shape is not critical.

One of the opposable parts of the device is a female part having an opening to receive a male element on the other part, and the transponder is housed in a body portion at the female part, preferably with a length axis of the transponder extending substantially radially (transversely) relative to the opening axis of the female part.

Preferably the male and female parts are connected by a link portion so that they form a loop when connected, and the transponder unit (which is preferably elongate) is retained in a capsule region of the link portion with its axis lying along the length of the link portion. The link portion may include a flexible region e.g. for folding around an animal's ear, the capsule region being stiff or less flexible and preferably directly adjacent one of the engageable parts. Preferably the link portion has an outer display surface adapted for marking with visual indicia - in the nature of a serial number - and most preferably this is a plain surface which may extend onto and along the capsule region.

As explained, the device has a body defining an internal cavity to house the transponder, and the cavity has an insertion opening for the transponder, the opening being directed towards a connection axis of the engageable parts. Where a link portion is provided connecting those parts, the opening is preferably directed in the length direction of that link portion.

The proposal is that a device of the kind described has a body defining a cavity to receive the transponder, the cavity having an insertion opening for the transponder which is accessible in the disengaged condition of the first and second parts, but in the engaged condition is blocked and/or locked. The transponder-cavity opening faces onto a female opening of the device so as to be blocked (or further blocked: it may already be closed) by a male member of the device when the parts are connected.

Male and female parts are used: their nature is not critical and may in itself be conventional, for example a simple circular opening for the female component, the male component being in the form of a spike with a barb formation at the tip to prevent withdrawal; the female component may have a cover for the tip of the spike after connection.

One preferred version is an attachable animal identification device having a male fastening member, a female fastening member adapted to receive the male fastening member in a locking manner and a loop link portion connecting the male and female portions, part of the loop link portion incorporating a cavity extending longitudinally of the link portion, preferably shaped so as to receive a rod-form transponder device, and having an insertion opening facing onto the part of the female member which receives the male member. A printable (or printed) display surface is provided along the outer side of the link portion.

Preferably the entire unit is formed as a one piece integral whole of plastics material, e.g. by moulding.

Embodiments of our proposals are now described in detail with reference to the accompanying drawings in which
Fig. 1 is a perspective view of an ear tag;
Fig. 2 is an axial cross-section at the female end of the tag of Fig. 1, somewhat enlarged, and
Fig. 3 is an end view of the female end.

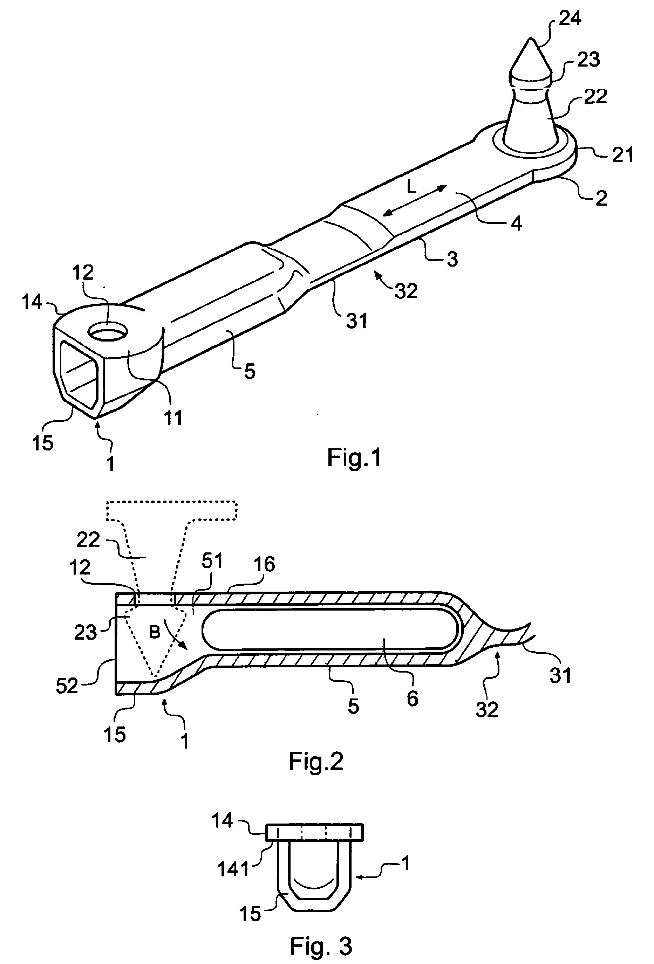

With reference to Fig. 1, an ear tag is made as a one-piece moulded plastics entity e.g. of nylon, polyurethane or other suitable plastics material: generally it should be UV-resistant and laser-printable. It has a female end 1 and a male end 2 connected by an elongate strip portion or link 3.

At the male end, the generally rectangular strip portion 3 enlarges into a circular platform 21 providing a base for a tapered engagement spike 22 with a tip barb 23 and an end point 24. The spike projects from the flat upper (inner) surface 4 of the strip 3.

The central part of the strip or link 3 has a reduced thickness portion or waist 31 to enhance flexibility, so that the tag can be folded around an animal's ear to oppose the male and female ends 1,2 through the ear.

At the female end 1, the tag provides an engagement face 11 with a central hole 12 dimensioned so that with substantial force the barbed spike 22 of the male end 2 can be pushed through it and then held irremovably in place. Towards the female end the tag has been moulded around a longitudinal mould projection so as to define an internal cavity. Extending from the link waist 31 towards the female end this provides the cavity for a transponder capsule 5 of generally uniform cross-section and elongate in the length direction L of the tag strip 3, to hold a generally cylindrical transponder module 6 which in itself may be conventional. The transponder module may simply be pushed or dropped during manufacture into the housing cavity from its end opening 51 (see Fig. 2), which faces onto the larger end opening 52 of the female part 1.

The transponder module 6 is easily inserted in its cavity 5 through the enlarged end opening 52 of the tag at the female end, and may then be blocked or sealed in place with a polymeric or adhesive plug. When the male spike has been pushed into place with the tag in situ on an animal's ear (not shown), the spike 22 further blocks the opening, keeping the transponder module 6 safely in place. A possible refinement to this design (not shown) is to form a portion integral with the upper wall 16 of the cage, e.g. a partially cut-out portion defining the insertion hole 12, so that when the spike 22 is pushed through it will fold the additional portion down (arrow B in Fig. 2) into the inner opening 51 of the transponder cavity 5, blocking and sealing the transponder more effectively into its housing.

The female end 1 forms a cage with an outer cover wall 15. With the male spike 22 locked into place, as shown in Fig. 2, this cage masks the locked end of the spike so protecting it from catching external objects and also protecting it against unauthorised interference or accidental damage which might undo the tag.

Typically a tag needs to carry a visual code in addition to the transponder. Typically this may be quite a lengthy alphanumeric series, e.g. letters indicating a country, numbers indicating an area, further numbers indicating a farm and still further numbers being the serial number for the individual animal. The present design is advantageous in that on its outside surface 32 (i.e. the underneath as indicated in Fig. 1) it presents a long plain laser-printable surface which extends onto the undersurface of the capsule 5 if necessary.

We also find that the illustrated incorporation of the transponder into one length of the loop link leads to the transponder lying in a favourable orientation for reading in use. At the same time, it gives a loop-form tag incorporating a transponder with minimal extra plastic, helping to keep weight down for the very small tags required e.g. for new lambs.

Fig. 3 shows a refinement at the female end, showing how the circular engagement face 11 extends out laterally as engagement lugs or ears 14 which are for gripping, in concert with the circular platform 21 at the male end, by an applicator tool when joining up the tag. To reduce the chance of the tool slipping out of alignment, with potential malfunction and/or wear of the applicator tool, the undersurfaces 141 of these lugs 14 are inclined or bevelled upwards towards the centre to serve as a centering guide.

## Claims

1. Animal identification device having mutually engageable male and female parts (2,1), adapted to fix together along a connection axis to attach the device to an animal in use, for example with the male part (2) through an animal's ear, and comprising
a body portion (5) incorporating an internal transponder cavity to house an identification transponder in use, the transponder cavity having an insertion opening (51) for the transponder, **characterised in that** said insertion opening faces onto the connection axis at an opening of the female part (1) so as to be accessible for insertion of an identification transponder in the disengaged condition of said male and female parts (2,1), but blocked by the male part (2) in the engaged position.

2. Animal identification device according to claim 1 in which the male part (2) has a spike (22).

3. Animal identification device according to claim 2 in which the female part (1) includes a cover (15) to cover the tip of the spike (22) of the male part in the engaged position.

4. Animal identification device according to claim 3 in which the female part has a cage, with an engagement face (11) having the opening (12) that receives said spike (22), an outer cover wall (15) opposed to the engagement face, providing said cover for the spike in the engaged position, and an outer longitudinally-facing opening (52) through which a said identification transponder is insertable, between the engagement face (11) and the outer cover wall (15) and into the transponder cavity through said insertion opening (51).

5. Animal identification device according to any one of the preceding claims comprising a link portion (3) connecting said male and female parts (2,1) and providing a flexible region, whereby in use the said parts (2,1) can be opposed to one another to either side of an animal's ear, with the link portion (3) folded around the edge of the ear.

6. Animal identification device according to claim 5 in which the body portion (5) defining the transponder cavity is incorporated in the link portion (3) adjacent to the female part (1).

7. Animal identification device according to claim 5 or 6 in which the link portion (3) presents an outer display surface (32) to carry a visual identification code.

8. Animal identification device according to any one of the preceding claims in which the transponder cavity is elongate, to receive a rod-shaped transponder.

9. Animal identification device according to any one of the preceding claims which is a one-piece moulded plastics entity.

10. Animal identification device according to any one of the preceding claims, in combination with an identification transponder (6) in said transponder cavity.

11. Animal identification device with transponder as claimed in claim 10, with a polymeric or adhesive plug blocking or sealing the insertion opening (51) of the transponder cavity.

## Patentansprüche

1. Tieridentifikationsvorrichtung mit einem Steck- und einem Aufnahmeteil (2, 1), die miteinander in Eingriff bringbar und angepasst sind, um entlang einer Verbindungsachse zusammengefügt zu werden, um die Vorrichtung bei der Verwendung an einem Tier, beispielsweise mit dem Steckteil (2) durch ein Ohr des Tiers hindurch, anzubringen, umfassend:
einen Körperabschnitt (5), der einen internen Transponderhohlraum aufweist, um bei der Verwendung einen Identifikationstransponder aufzunehmen, wobei der Transponderhohlraum eine Einführungsöffnung (51) für den Transponder aufweist, **dadurch gekennzeichnet, dass** die Einführungsöffnung an einer Öffnung des Aufnahmeteils (1) der Verbindungsachse gegenüberliegt, um im Zustand des gelösten Eingriffs zwischen dem Steck- und dem Aufnahmeteil (2, 1), für die Einführung eines Identifikationstransponders zugänglich zu sein, im Zustand des Eingriffs aber durch das Steckteil (2) blockiert zu sein.

2. Tieridentifikationsvorrichtung nach Anspruch 1, worin das Steckteil (2) einen Dorn (22) aufweist.

3. Tieridentifikationsvorrichtung nach Anspruch 2, worin das Aufnahmeteil (1) eine Abdeckung (15) umfasst, um die Spitze des Doms (22) des Steckteils (2) in der Eingriffsstellung abzudecken.

4. Tieridentifikationsvorrichtung nach Anspruch 3, worin das Aufnahmeteil ein Gehäuse aufweist, das eine Eingriffsoberfläche (11), in der die Öffnung (12) zur Aufnahme des Doms (22) ausgebildet ist, eine äußere Abdeckungswand (15), die der Eingriffsoberfläche (11) gegenüberliegt und die Abdeckung für den Dorn in der Eingriffsstellung bereitstellt, und eine in Längsrichtung weisende äußere Öffnung (52), durch die der Identifikationstransponder zwischen der Eingriffsoberfläche (11) und der äußeren Abdeckungswand (15) und durch die Einführungsöffnung (51) in den Transponderhohlraum einführbar ist, umfasst.

5. Tieridentifikationsvorrichtung nach einem der vorangegangenen Ansprüche, umfassend einen Verbindungsabschnitt (3), der das Steck- und das Aufnahmeteil (2, 1) verbindet und einen biegsamen Bereich bereitstellt, wodurch bei der Verwendung die Teile (2, 1) einander an beiden Seiten eines Tierohrs gegenüberliegen können, wobei der Verbindungsabschnitt (3) um den Rand des Ohrs herumgelegt ist.

6. Tieridentifikationsvorrichtung nach Anspruch 5, worin der Körperabschnitt (5), der den Transponderhohlraum definiert, benachbart zum Aufnahmeteil (1) im Verbindungsabschnitt (3) integriert ist.

7. Tieridentifikationsvorrichtung nach Anspruch 5 oder 6, worin der Verbindungsabschnitt (3) eine äußere Anzeigenoberfläche (32) aufweist, um einen visuellen Identifizierungscode zu tragen.

8. Tieridentifikationsvorrichtung nach einem der vorangegangenen Ansprüche, worin der Transponderhohlraum länglich ist, um einen stabförmigen Transponder aufzunehmen.

9. Tieridentifikationsvorrichtung nach einem der vorangegangenen Ansprüche, die eine einstückig geformte Kunststoffeinheit ist.

10. Tieridentifikationsvorrichtung nach einem der vorangegangenen Ansprüche in Kombination mit einem Identifikationstransponder (6) im Transponderhohlraum.

11. Tieridentifikationsvorrichtung mit Transponder nach Anspruch 10 mit einem Polymer- oder Klebestöpsel zum Blockieren oder Verschließen der Einführungsöffnung (51) des Transponderhohlraums.

## Revendications

1. Dispositif d'identification d'un animal ayant des pièces mâle et femelle (2, 1) mutuellement engageables, adaptées à se fixer ensemble le long d'un axe de connexion pour attacher le dispositif à un animal en utilisation, par exemple avec la pièce mâle (2) à travers une oreille de l'animal, et comprenant
une portion de corps (5) incorporant une cavité de transpondeur interne pour abriter un transpondeur d'identification en utilisation, la cavité du transpondeur ayant une ouverture d'insertion (51) pour le transpondeur, **caractérisé en ce que** ladite ouverture d'insertion fait face à l'axe de connexion à une ouverture de la pièce femelle (1) de façon à être accessible pour l'insertion d'un transpondeur d'identification en condition dégagée desdites pièces mâle et femelle (2, 1), mais bloqué par la pièce mâle (2) à la position engagée.

2. Dispositif d'identification d'un animal selon la revendication 1 dans lequel la pièce mâle (2) a une pointe (22).

3. Dispositif d'identification d'un animal selon la revendication 2 dans lequel la pièce femelle (1) comprend un couvercle (15) pour couvrir l'extrémité de la pointe (22) de la pièce mâle à la position engagée.

4. Dispositif d'identification d'un animal selon la revendication 3 dans lequel la pi èce femelle a une cage avec une phase d'engagement (11) ayant l'ouverture (12) qui reçoit ladite pointe (22), une paroi externe de recouvrement (15) opposée à la face d'engagement, formant ledit couvercle pour la pointe à la position engagée et une ouverture externe faisant face longitudinalement (52) à travers laquelle ledit transpondeur d'identification peut être inséré entre la face d'engagement (11) et la paroi de couvercle externe (15) et dans la cavité du transpondeur à travers ladite ouverture d'insertion (51).

5. Dispositif d'identification d'un animal selon l'une quelconque des revendications précédentes comprenant une portion de charnière (3) reliant lesdites pièces mâle et femelle (2,1) et formant une région flexible, et en utilisation, lesdites pièces (2, 1) peuvent être mises en opposition l'une à l'autre de chaque côté d'une oreille d'un animal avec la portion de charnière (3) pliée autour du bord de l'oreille.

6. Dispositif d'identification d'un animal selon la revendication 5 dans lequel la portion de corps (5) définissant la cavité du transpondeur est incorporée dans la portion de charnière (3) à proximité de la pièce femelle (1).

7. Dispositif d'identification d'un animal selon la revendication 5 ou 6 dans lequel la portion de charnière (3) présente une surface externe d'affichage (32) pour porter un code visuel d'identification.

8. Dispositif d'identification d'un animal selon l'une quelconque des revendications précédentes dans lequel la cavité du transpondeur est allongée pour recevoir un transpondeur en forme de tige.

9. Dispositif d'identification d'un animal selon l'une quelconque des revendications précédentes qui est une entité en matière plastique moulée en une pièce.

10. Dispositif d'identification d'un animal selon l'une quelconque des revendications précédentes en combinaison avec un transpondeur d'identification (16) dans ladite cavité du transpondeur.

11. Dispositif d'identification d'un animal avec transpondeur selon la revendication 10 avec un bouchon polymérique ou adhésif bloquant ou scellant l'ouverture d'insertion (51) de la cavité du transpondeur.
